# EUROPÄISCHE PATENTSCHRIFT

(11) **EP 0 590 460 B1**
(45) Veröffentlichungstag und Bekanntmachung des Hinweises auf die Patenterteilung: **05.08.1998**
(21) Anmeldenummer: 93115089.0
(22) Anmeldetag: 20.09.1993
(51) Int. Cl.: C08F 20/44, D01F 6/18, C08F 267/10

(54) **Hochkonzentrierte wässrige Poly(acrylnitril)-Emulsionen und Verfahren zu ihrer Herstellung**
Highly concentrated aqueous poly(acrylonitrile) emulsions and process for their preparation
Emulsions aqueuses très concentrés de poly(acrylonitrie) et procédé de leur préparation

(30) Priorität: 01.10.1992 DE 4233026
(43) Veröffentlichungstag der Anmeldung: 06.04.1994
(73) Patentinhaber: BAYER AG, 51368 Leverkusen (DE)
(72) Erfinder: Sackmann, Günter, Dr., D-51379 Leverkusen (DE); Korte, Siegfried, Dr., D-51519 Odenthal (DE); Alberts, Heinrich, Dr., D-51519 Odenthal (DE); Meyer, Rolf-Volker, Dr., D-47803 Krefeld (DE)

(56) Entgegenhaltungen:
- EP-A- 0 331 066
- EP-A- 0 462 469
- US-A- 2 140 048
- CHEMICAL PROCESSING OF SYNTHETIC FIBERS AND BLENDS, Keshav v. Datye, John Wiley Verlag, 1984, S. 13-14.

## Beschreibung

Die vorliegende Erfindung betrifft hochkonzentrierte wäßrige Emulsionen von Polymerisaten, die 80 bis 100 Gew.-% Acrylnitril einpolymerisiert enthalten sowie ein Verfahren zur deren Herstellung und ihre Verwendung als Rohstoffe für Acryl- und Modacrylfasern und als Färbeadditive zur Justierung der Farbstoffaffinität von kationischen Farbstoffen bei konventionellen Acryl- und Modacrylpolymeren und daraus hergestellten Fasermaterialien.

Bisher ist die Herstellung stabiler wäßriger Emulsionen von Acrylnitril-Homopolymeren sowie von -copolymeren mit einem sehr hohen Acrylnitril-Anteil nicht oder nur unter sehr eingeschränkten Bedingungen möglich. Man erhält in der Regel instabile, in den meisten Fällen überhaupt keine Emulsionen (s. Houben-Weyl, Methoden der organischen Chemie, Bd. E20/T1.2, S. 1216 ff., G. Thieme Verlag, Stuttgart, 1987). Es ist möglich, stabile Polyacrylnitril(PAN)-Emulsionen mit Feststoffgehalten von weniger als 8 Gew.-% herzustellen, doch nur bei einem sehr niedrigen Monomerangebot aus verdünnter wäßriger Lösung unter Einsatz spezieller Radikalstarter, die ionische oder sonstige hydrophile Endgruppen ins Polymere einführen und damit eine stabilisierende Wirkung ausüben. Auch Sulfonsäuregruppen enthaltende Copolymere, z. B. aus Acrylnitril und Natrium-Styrolsulfonat, bildeten bisher nur dann stabile Emulsionen, wenn die Polymerisation bei niedrigem Umsatz abgebrochen wurde und die Monomerkonzentration nicht höher als 5 Gew.-% lag.

Eine allerdings nur bei sehr hohen, produktschädigenden Temperaturen und hohen Drücken durchzuführende Polymerisationsmethode führt nach (DE-OS 2 709 503 ≙ US-PS 4 130 525) zu stabilen wäßrigen Polyacrylnitril-Emulsionen mit Teilchendurchmesser von weniger als 1 µm und Polymerisatkonzentrationen bis zu 30 Gew.-%. Hierzu werden Copolymere aus Acrylnitril und Sulfonsäuregruppen enthaltenden copolymerisierbaren Verbindungen bei Temperaturen > 120°C und Drücken von 5 bis 100 bar in wäßriger Phase durch radikalische Polymerisation hergestellL Wie dort in einem Vergleichsbeispiel aufgezeigt wird, erhält man auch mit dieser Reaktion ohne Anwendung der drastischen Reaktionsbedingungen keine stabilen Polyacrylnitril-Emulsionen. Neben der schlechten Beherrschbarkeit dieser Reaktion spricht vor allem die thermische Schädigung und die damit einhergehende unzureichende Qualität der auf diese Weise erhaltenen Polymerisate gegen ihren Einsatz bei der Herstellung von Fasern.

Aufgabe der Erfindung ist es, hochkonzentrierte wäßrige Emulsionen von Polymerisaten mit Acrylnitril-Anteilen von 80 bis 100 Gew.-% bereitzustellen, und diese nach einem einfachen und leicht durchzuführenden Emulsionspolymerisationsverfahren direkt mit Feststoffgehalten von 10 bis 55 Gew.-% herzustellen.

Es wurde gefunden, daß beim Einsatz von Sulfonsäuregruppen enthaltenden polymeren Emulgatoren der allgemeinen Formeln (I) oder (II) bei der Emulsionspolymerisation von Acrylnitril enthaltenden Monomermischungen stabile wäßrige Emulionen von Acrylnitril(Co)-Polymeren mit Acrylnitrilgehalten von 80 bis 100 Gew.-% und mit Feststoffgehalten bis zu ca. 55 Gew.-% hergestellt werden können.

Gegenstand der Erfindung ist ein Verfahren zur Herstellung wäßriger Emulsionen von Polymerisaten mit Anteilen an Acrylnitril von 80 bis 100 Gew.-% im (Co)polymerisat, das dadurch gekennzeichnet ist, daß man Monomergemische, die mindestens 80 Gew.-% Acrylnitril enthalten, in Gegenwart eines polymeren Emulgators bestehend aus einem Polymerisat enthaltend Struktureinheiten der allgemeinen Formeln (I) und/oder (II) 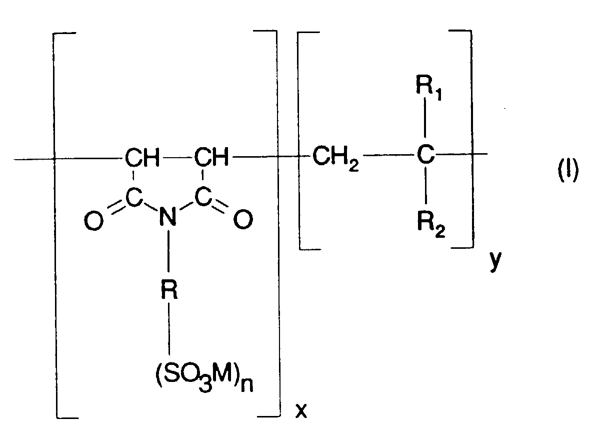 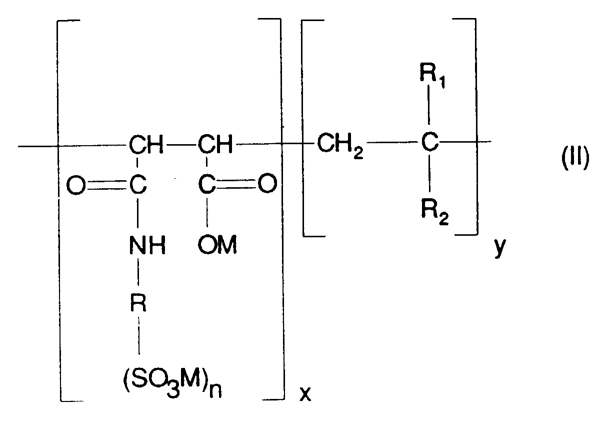 in denen
- M: einen kationenbildenden Rest, vorzugsweise H, Na, K, NH₄, R₃NH₃,
- n: 1 oder 2,
- R: -(CH₂)₂NH(CH₂)₂-,
- R₁: H,-CH₃,
- R₂: H, C₁-C₁₆-Alkyl, vorzugsweise -CH₃, -C₂H₅, -C₄H₉, -CH₂-C(CH₃)₃, -C₁₄H₂₉, -C₁₆H₃₃ und Phenyl,
- R₃: einen Kohlenwasserstoffrest eines Amins bezeichnen und
- x, y: so gewählt werden, daß das Gewichtsmittelmolekulargewicht M_{w} der Polymerisate (I) und (II) 2.000 bis 500.000, vorzugsweise 5.000 bis 100.000, beträgt und das Verhältnis von x:y = 1:4 bis 1:1, bevorzugt 1:3 bis 1:1 ist,
in wäßriger Emulsion in Gegenwart radikalischer Initiatoren polymerisiert.

Gegenstand der Erfindung sind auch die so erhaltenen wäßrigen Emulsionen.

Bei den erfindungsgemäß verwendeten Emulgatoren kann es sich um Gemische handeln, in denen vorzugsweise >80%, besonders bevorzugt >90%, bezogen auf das Gemisch, Struktureinheiten (I) neben den Struktureinheiten (II) vorliegen. Es kann auch als polymerer Emulgator allein das der Formel (I) entsprechende Polymerisat verwendet werden. Die Menge an polymerem Emulgator beträgt, bezogen auf die zu polymerisierenden Monomeren, 2 bis 25 Gew.-%, bevorzugt 2 bis 20 Gew.-%.

Bei den polymeren Emulgatoren der allgemeinen Formeln (I) und (II) handelt es sich um Reaktionsprodukte von alternierenden Copolymeren aus Maleinsäureanhydrid und α-Olefinen oder Styrol. Zu ihrer Herstellung kann man wie folgt vorgehen:

Copolymere aus Maleinsäureanhydrid oder Maleinsäure(halb)estern und Olefinen der Formel 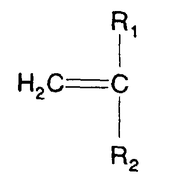 in der
- R₁ und R₂: die in den Formeln I und II angegebenen Bedeutungen haben,
werden mit Aminosulfonsäuren bzw. deren Salzen der Formel H₂N-R-(SO₃M)ₙ, in der R, M und n die in den Formeln I und II angegebenen Bedeutungen haben, in organischen Lösungsmitteln oder vorzugsweise in wäßriger Lösung, bei Temperaturen bis 250°C, bevorzugt 100 bis 250°C, besonders bevorzugt 120 bis 200°C, und Reaktionszeiten von 5 bis 20 Stunden, bevorzugt 10 bis 15 Stunden, umgesetzt.

Eine genaue Beschreibung der Herstellung solcher polymerer Emulgatoren findet man in der DE-OS 38 07 097 (≙ US4 931 510 und US-5 013 794) und in der DE-OS 40 19 798 (≙ EP-A 462 469).

Bevorzugt sind alternierend oder statistisch aufgebaute Copolymerisate aus Maleinsäureanhydrid und z.B. Ethylen, Styrol, α-Methylstyrol, Propylen, Isobutylen, Buten-1, Diisobutylen, Dodecen-1, Hexadecen-1 und Octadecen-1, wobei das molare Verhältnis zwischen Maleinsäureanhydrid und den zu copolymerisierenden Monomeren zwischen 1:1 und 1:4 liegt. Die Herstellung solcher Copolymerisate ist bekannt und ist z.B. in Houben-Weyl, Methoden der organischen Chemie, Bd. E20/T1.2, Georg Thieme Verlag, Stuttgart, 1987, S. 1237 ff., beschrieben.

Als Monomere zur Herstellung der erfindungsgemäßen wäßrigen Emulsionen kommen in Frage: Acrylnitril allein und Gemische von Acrylnitril mit Styrol, α-Methylstyrol, Vinylacetat, Ethylacrylat, Methylmethacrylat, n-Butylacrylat, i-Butylacrylat, Methylacrylat, 2-Ethylhexylacrylat, halogenhaltigen Vinylmonomeren (z.B. Vinylchlorid, Vinylidenchlorid und Vinylbromid) oder Mischungen daraus. Bevorzugt ist Acrylnitril allein und dessen Mischungen mit n-Butylacrylat, Methylacrylat und Vinylacetat, die letztgenannten bevorzugt in Mengen von 2,5 bis 20,0 Gew.-%, besonders bevorzugt 2,5 bis 10,0 Gew.-%.

Acrylnitril bzw. seine Mischungen mit anderen Monomeren können in Gegenwart von Verbindungen der Formeln I und II in wäßriger Emulsion in an sich bekannter Weise mit Hilfe von verschiedenen Initiatoren polymerisiert werden. . Als Initiatoren eignen sich Kaliumpersulfat, Natriumpersulfat, Ammoniumpersulfat, organische Peroxide, Wasserstoffperoxid sowie Redoxsysteme, wie z. B. H₂O₂/Rongalit, Ammoniumpersulfat/Rongalit, Natrium- oder Kaliumpersulfat/Rongalit, t-Butylhydroperoxid/Ascorbinsäure, Persulfat/Sulfit/Fe²⁺ u.a. Die Polymerisation erfordert Temperaturen von 20 bis 100°C, bevorzugt von 40 bis 100°C.

Zur Durchführung der Emulsionspolymerisation kann man eine wäßrige Lösung des Emulgatorgemischs vorlegen und dann die Monomeren und den Initiator allmählich, z.B. während 2 bis 6 Stunden, getrennt zudosieren, oder man legt einen Teil des polymeren Emulgators in Wasser vor und dosiert den Rest zusammen mit den Monomeren und dem Initiator in getrennten Mengenströmen ebenfalls allmählich während 2 bis 6 Stunden zu. Man kann auch während der gesamten Polymerisationszeit Emulgator, Initiator und Monomere getrennt und kontinuierlich zudosieren und anfangs lediglich Wasser vorlegen. Es ist auch möglich, diskontinuierlich zu arbeiten: Emulgator, Monomer(gemisch) und Initiator, werden zusammen vorgelegt, auf die gewünschte Polymerisationstemperatur erhitzt und 2 bis 10 Stunden bei dieser Temperatur gehalten.

Nach Ende der Polymerisationsreaktion erhält man eine feinteilige wäßrige Polymeremulsion, die frei von Ausscheidungen ist. Die durch Laser Korrelations-Spektroskopie ermittelten mittleren Teilchendurchmesser in den Emulsionen betragen 60 bis 500 nm, bevorzugt 80 bis 200 nm. Die Größe der Teilchen kann bis zu einem gewissen Grade durch die Menge an eingesetztem polymerem Emulgator gesteuert werden; mit zunehmender Emulgatormenge nimmt die Teilchengröße ab.

Die erhaltenen Polymerisate besitzen K-Werte nach H. Fikentscher (Cellulosechemie 15 (1932) S. 58 ff) von 60 bis 150, bevorzugt - insbesondere für die Herstellung von Textilfasern - von 70 bis 90. Die K-Werte der Polymerisate können weitgehend durch die Konzentration des Initiators oder durch Reglersubstanzen, z.B. Thioglykol, n-Dodecylmercaptan, Nitroverbindungen, auf die gewünschten Werte eingestellt werden. (Der K-Wert ist ein Maß für das Molekulargewicht.)

Die Polymeremulsionen enthalten neben Homo- und/oder Copolymerisaten des zur Polymerisation eingesetzten Acrylnitrils und/oder seiner Mischungen mit anderen Monomeren auch Anteile von Pfropfpolymerisat der eingesetzten Monomeren, auf den polymeren Emulgatoren.

Die erfindungsgemäßen Polymeremulsionen können entweder als solche zur Herstellung von Filmen und Fasern, als Färbeadditive für Fasern eingesetzt werden, oder man kann sie zur Gewinnung der festen Polymerisate aufarbeiten, die dann über andere Wege Einsatz in den o.g. Anwendungsgebieten finden können. Außerdem können die Polymeremulsionen gemäß der Erfindung bei der Fällungspolymerisation des Acrylnitrils als Ersatz für das Färbecomonomere eingesetzt werden.

Gegenstand der Erfindung ist auch die Verwendung der erfindungsgemäßen Emulsionen zur Herstellung von Fasern oder von Färbeadditiven für Acrylfasern.

Zur Herstellung von Textilfasern müssen die Emulsionen zunächst in Spinnlösungen überführt werden. Dazu kann man die Polymerisate durch Fällen, Waschen und Trocknen oder durch Sprühtrocknung des Pulvers isolieren und dann in einem geeigneten Lösungsmittel auflösen. Man kann auch die Emulsion direkt in eine spinnfähige Lösung "umsolen", d.h. gleichzeitig Wasser abdestillieren und ein für Acrylpolymere typisches Lösungsmittel zuführen, z.B. Dimethylformamid oder Dimethylacetamid. Die Sprühtrocknung und Wiederauflösung ist bevorzugt.

Wie bereits erwähnt, können die erfindungsgemäßen Polymerisate auch als Färbeadditive für Fasern eingesetzt werden. Darunter versteht man Substanzen mit farbaffinen Gruppen, d.h. bei Acrylfasern in der Regel stark sauren Gruppen, die in einer Konzentration von 40 bis 60 mÄquiv./kg vorliegen. Diese Konzentration an farbaffinen Gruppen kann durch das Startersystem, z.B. Persulfät/NaHSO₃, sowie acide Comonomere, wie z.B. Methallylsulfonsäure, Styrolsulfonsäure oder 2-Acrylamido-2-methylpropansulfonsäure eingeführt werden. Aus wirtschaftlichen, vor allem aber aus ökologischen Gründen ist aber ein Verzicht auf solche Sulfonsäuregruppen enthaltenden Monomeren erwünscht. Die bei der erfindungsgemäßen Emulsionspolymerisation verwendeten polymeren Emulgatoren fungieren wegen ihres hohen Gehaltes an Sulfonatgruppen, der je nach Einsatz an polymerem Emulgator zwischen 80 bis 500 mÄquiv/kg betragen kann, als polymere Farbeadditive bei der Herstellung von Acrylfasern, d.h. die Aufnahme kationischer Farbstoffe durch die Fasern (Potential und Geschwindigkeit) kann durch geeignete Dosierung dieser Emulsionspolymerisate auf das jeweils gewünschte Niveau eingestellt werden.

### Anwendungsbeispiele

Die folgenden Anwendungsbeispiele zeigen den Einsatz der erfindungsgemäßen Emulsionspolymerisate zur Herstellung von Acrylfasern (Beispiel 1).

### Beispiel 1

Aus einer 30 gew.-%igen wäßrigen Emulsion eines Copolymerisats aus 92,5 Gew.-% Acrylnitril und 7,5 Gew.-% n-Butylacrylat wird das Polymerisat durch Eindampfen isoliert und im Vakuumtrockenschrank bei 70°C bis zur Gewichtskonstanz getrocknet. Das Copolymere weist einen in Dimethylformamid mit Elektrolytzusatz (3 g NaNO₃/l) gemessenen K-Wert von 100,8 auf. Der K-Wert wurde nach H.Fikentscher, Cellulosechemie 15 (1932), S. 58, bestimmt.

Durch Auflösen des Copolymeren in Dimethylformamid wird eine Spinnlösung mit einem Feststoffgehalt von 23 Gew.-% und einer Lösungsviskosität von 120 Pa.s, gemessen bei 30°C, hergestellt.

Diese Lösung wurde unter den üblichen Bedingungen des Trockenspinnens in einem Versuchsspinnschacht über eine 16-Loch-Düse mit Lochdurchmessern von jeweils 0,2 mm versponnen. Die Temperatur im Spinnschacht betrug dabei 200°C, und die Lufttemperatur lag bei 250°C. Die ersponnenen Fasern wurden mit einer Geschwindigkeit von 130 m/min abgezogen. Die Fasern wurden in 2 Stufen nachbehandelt: Erste Stufe: Heißwasserverstreckung bei 94°C mit einem Streckverhältnis von 5,0; Zweite Stufe: Heißluftfixierung bei 160°C mit einer Relaxation von 14 %. Daraus resultiert ein Gesamtstreckverhältnis von 1:4,1.

Zum Vergleich wurden unter denselben Spinnbedingungen aus einem handelsüblichen Acrylpolymerisat ebenfalls Fasern gesponnen.

Dieses Acrylpolymerisat besitzt folgende Zusammensetzung:

| | |
|---|---|
| Acrylnitril | 93,5 Gew.-% |
| Acrylsäuremethylester | 5,8 Gew.-% |
| Na-methallylsulfonat | 0,5 Gew.-% |

und weist einen K-Wert von 84,2 auf, und die Konzentration stark saurer Gruppen beträgt 59 mVal/kg.

Die folgende Tabelle 1 vergleicht die Eigenschaften der nach dem Beispiel 1 erhaltenen Fasern mit denen der aus dem handelsüblichen Polymerisat gesponnenen:

**Tabelle 1**

| | Beispiel 1 | Vergleich |
|---|---|---|
| Titer (Einzelfaden) [dtex] | 4,30 | 6,70 |
| | | |
| Festigkeit [cN/dtex] | 3,46 | 2,72 |
| | | |
| Dehnung (HZKD) [%] | 20,3 | 45,3 |
| | | |
| Kochschrumpf | 6,0 | 1,0 |
| | | |
| Färbewirksame, stark acide Gruppen [mVal/kg] | 92,0 | 59,0 |

Das Beispiel 1 zeigt deutlich, daß man durch Verwendung der erfindungsgemäßen Emulsionspolymerisate Fasern mit einem hohen Gehalt an farbaffinen Gruppen erhalten kann. Solche Werte lassen sich sonst nur durch das Einpolymerisieren von Sulfonat-Färbecomonomeren in die Acrylcopolymerisate erreichen.

**Tabelle 2**

| | Acrylpolymerisat aus Beispiel 1 | Handelsübliches ACN-Unipolymerisat |
|---|---|---|
| Spinnbedingungen: | | |
| Lösungskonz. [%] | 26,0 | 24,5 |
| Viskosität b. 30°C [Pa.s] | 96 | 134 |
| Schachttemperatur [°C] 200 | 200 | 200 |
| Lufttemperatur [°C] | 250 | 250 |
| Düse [Loch/Durchm.i.mm] | 16/0,2 | 16/0,2 |
| Abzug [m/min] | 130 | 130 |

| Nachbehandlungsbedingungen: | | |
|---|---|---|
| Stufe 1: (Vorverstr.) | | |
| Strecktemperatur | 95 | 94 |
| Streckverhältnis | 4,0 | 6,0 |

| Stufe 2: (Relaxierung + Fixierung) | | |
|---|---|---|
| Strecktemperatur [°C] | 160 | 160 |
| Gesamt-Streckverhältnis | 3,4 | 5,1 |
| Relaxation [%] | 15 | 15 |

| Faserdaten (Einzelfasern): | | |
|---|---|---|
| Titer [dtex] | 6,70 | 4,12 |
| Festigkeit (HZK) [cN/dtex] | 2,72 | 4,49 |
| Dehnung (HZKD) [%] | 45,3 | 26,1 |
| Kochschrumpf [%] | 1,0 | 2,0 |
| Gehalt an Farbewirksamen Gruppen [mVal/kg] | 59,0 | 23,4 |

## Patentansprüche

1. Verfahren zur Herstellung von wäßrigen Emulsionen von Acrylnitril(co)Polymerisaten mit Anteilen an Acrylnitril von 80 bis 100 Gew.-% im (Co)polymerisat, dadurch gekennzeichnet, daß man Monomergemische, die mindestens 80 Gew.-% Acrylnitril enthalten, in Gegenwart eines polymeren Emulgators, bestehend aus einem Polymerisat enthaltend Struktureinheiten der allgemeinen Formeln (I) und/oder (II) 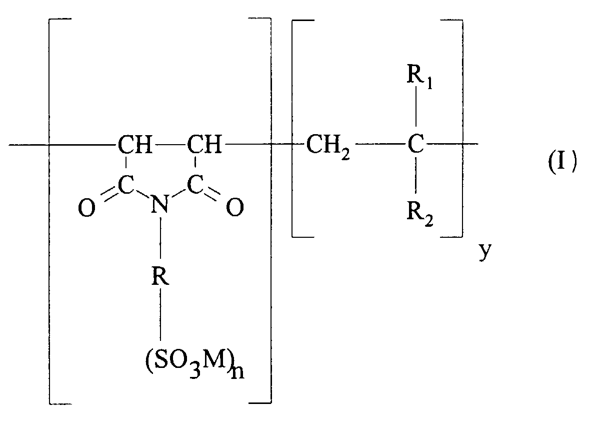 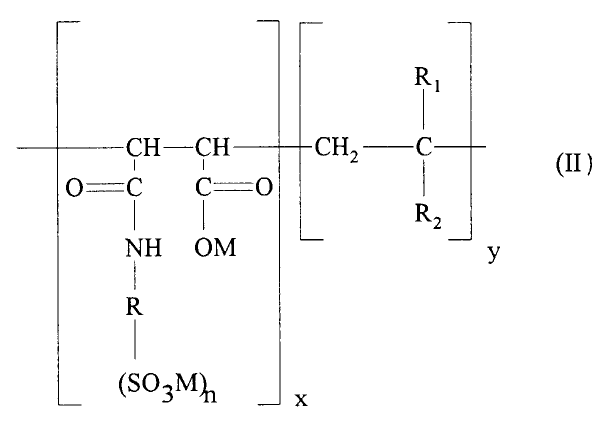 in denen
M einen kationenbildenden Rest,
n 1 oder 2,
R einen Rest -(CH₂)₂NH(CH₂)₂-,
R₁ H, -CH₃,
R₂ H, C₁-C₁₆-Alkyl oder Phenyl,
R₃ einen Kohlenwasserstoffrest eines Amins bezeichnen und
x, y so gewählt werden, daß das Gewichtsmittelmolekulargewicht M_{w} der Polymerisate (I) oder (II) 2.000 bis 500.000 beträgt und das Verhältnis von x:y = 1:4 bis 1:1 ist
in wäßriger Emulsion in Gegenwart von radikalischen Initiatoren polymerisiert.

2. Verfahren gemäß dem Anspruch 1, dadurch gekennzeichnet, daß man als polymeren Emulgator ein Polymerisat mit Struktureinheiten gemäß den Formeln (I) und (II) einsetzt, in dem >80 % Struktureinheiten (I) vorliegen.

3. Verfahren gemäß den Ansprüchen 1 und 2, dadurch gekennzeichnet, daß als Monomerengemische Acrylniril und Styrol(derivate) oder(Meth)acrylate verwendet werden.

4. Verfahren nach Anspruch 1, dadurch gekennzeichnet, daß der Initiator ein Redoxinitiator aus Wasserstoffperoxid und Rongalit oder Ammoniumpersulfat und Rongalit ist.

5. Wäßrige Emulsionen von Polymerisaten, die 80 bis 100 Gew.-% Acrylnitril einpolymerisiert enthalten mit einem Feststoffgehalt von 10 bis zu 55 Gew.-%, in denen das Polymerisat K-Werte nach Fikentscher von 60 bis 150 aufweist, erhältlich nach dem Verfahren gemäß der Ansprüche 1 bis 4.

6. Verwendung der Emulsionen gemäß Anspruch 5 zur Herstellung von Fasern nach dem Trockenspinnverfahren.

7. Verwendung der Emulsionen gemäß Anspruch 5 zur Herstellung von Färbeadditiven für Acrylfasern.

## Claims

1. Process for preparing aqueous emulsions of acrylnitrile (co)polymers with 80 to 100 wt.% of acrylonitrile in the (co)polymer, characterised in that monomer mixtures which contain at least 80 wt.% of acrylonitrile, are polymerised in the presence of a polymeric emulsifier consisting of a polymer which contains structural units of the general formulae (I) and/or (II) 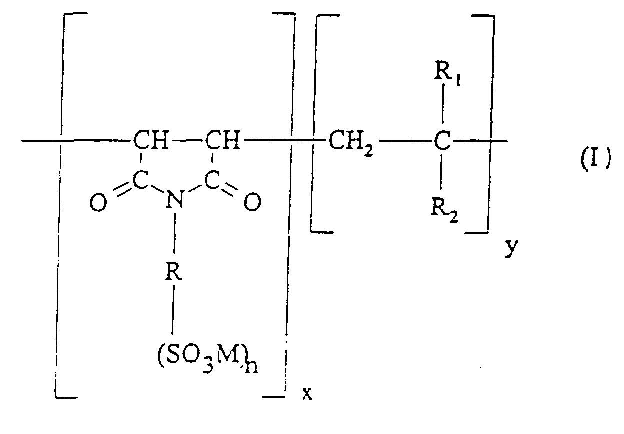 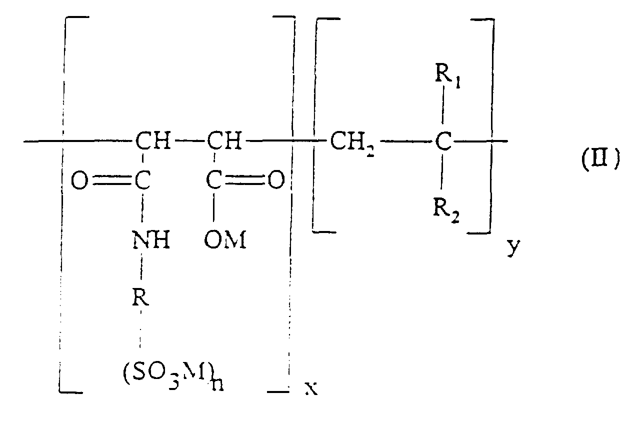 in which
M represents a cation-forming group,
n is 1 or 2,
R represents a - (CH₂)₂NH(CH₂)₂- group,
R₁ represents or -CH₃,
R₂ represents H, a C₁-C₁₆ alkyl group or phenyl,
and
x, y are chosen so that the weight average molecular weight Mw of polymer (I) or (II) is 2,000 to 500,000 and the ratio x:y is 1:4 to 1:1,
in aqueous emulsion in the presence of radical initiators.

2. Process according to Claim 1, characterised in that a polymer with structural units in accordance with formulae (I) and (II) in which >80% of the structural units are represented by (I), is used as the polymeric emulsifier.

3. Process according to Claims 1 and 2, characterised in that acrylonitrile and styrene (derivatives) or (meth)acrylates are used as monomer mixtures.

4. Process according to Claim 1, characterised in that the initiator is a redox initiator consisting of hydrogen peroxide and Rongalite or ammonium persulphate and Rongalite.

5. Aqueous emulsions of polymers in which 80 to 100 wt.% of acrylonitrile is incorporated, with a solids content of 10 to 55 wt.% and in which the polymer has a Fikentscher K value of 60 to 150, obtainable by the process according to Claims 1 to 4.

6. Use of emulsions according to Claim 5 to prepare fibres by the dry-spinning process.

7. Use of emulsions according to Claim 5 for preparing colouring additives for acrylic fibres.

## Revendications

1. Procédé pour la préparation d'émulsions aqueuses de produits de (co)polymérisation d'acrylonitrile avec des parts en acrylonitrile de 80 à 100% en poids dans le produit de (co)polymérisation, caractérisé en ce que l'on polymérise en émulsion aqueuse en présence d'initiateurs radicalaires des mélanges monomères qui contiennent au moins 80% en poids d'acrylonitrile, en présence d'un émulsionnant polymère constitué d'un produit de polymérisation contenant des unités de structure des formules générales (I) et/ou (II) 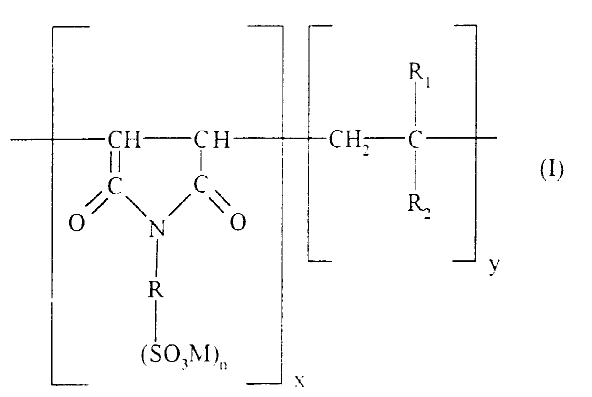 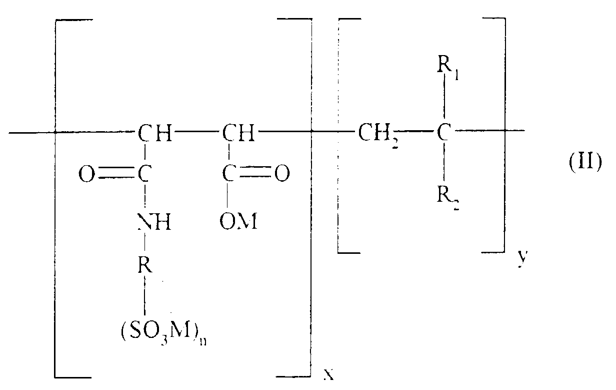 dans lesquelles
M représente un reste formant des cations,
n est égal à 1 ou 2,
R représente un reste -(CH₂)₂NH(CH₂)₂-,
R₁ représente H,-CH₃,
R₂ représente H, un groupe alkyle en C₁-C₁₆ ou un groupe phényle,
x, y sont choisis de telle sorte que le poids moléculaire moyen en poids M_{w} des produits de polymérisation (I) ou (II) est de 2 000 à 500 000 et le rapport de x : y = 1:4 à à 1:1.

2. Procédé selon la revendication 1, caractéristé en ce que l'on utilise comme émulsionnant polymère un produit de polymérisation avec des unités de structure selon les formules (I) et (II), dans lequel >80% d'unités de structure (I) sont présents.

3. Procédé selon les revendications 1 et 2, caractérisé en ce que l'on utilise comme mélanges monomères de l'acrylonitrile et du styrène (dérivés) ou du (méth)acrylate.

4. Procédé selon la revendication 1, caractérisé en ce que l'initiateur est un initiateur Redox de peroxyde d'hydrogène et de Rongalite ou de persulfate d'ammonium et de Rongalite.

5. Emulsions aqueuses de produits de polymérisation qui contiennent de 80 à 100% en poids d'acrylonitrile copolymérisé avec une teneur en matières solides de 10 à 55% en poids, dans lesquelles le produit de polymérisation présente des valeurs K selon Fikentscher de 60 à 150, disponibles selon le procédé selon les revendications 1 à 4.

6. Utilisation des émulsions selon la revendication 5 pour la préparation de fibres selon le procédé de filage à sec.

7. Utilisation des émulsions selon la revendication 5 pour la préparation d'additifs de teinture pour des fibres acryliques.
